# EUROPÄISCHE PATENTSCHRIFT

(11) **EP 3 086 115 B1**
(45) Veröffentlichungstag und Bekanntmachung des Hinweises auf die Patenterteilung: **19.05.2021**
(21) Anmeldenummer: 16165094.0
(22) Anmeldetag: 13.04.2016
(51) Int. Cl.: G01N 27/82

(54) **PRÜFUNGS- UND ÜBERWACHUNGSSYSTEM FÜR EINE SEILBAHN, INSBESONDERE FÜR EINEN URBANEN TRANSPORT VON PERSONEN UND GÜTERN, SOWIE EIN VERFAHREN ZUM BETRIEB DERSELBEN**
TEST AND MONITORING SYSTEM FOR A ROPEWAY, IN PARTICULAR FOR AN URBAN TRANSPORT OF PERSONS AND GOODS, AND METHOD FOR OPERATING THE SAME
SYSTÈME DE CONTRÔLE ET DE SURVEILLANCE POUR UN TÉLÉPHÉRIQUE, PLUS PARTICULIÈREMENT POUR UN TRANSPORT URBAIN DE PERSONNES ET DE MARCHANDISES, ET PROCÉDÉ D'EXPLOITATION DE CELUI-CI

(30) Priorität: 13.04.2015 CH 5212015
(43) Veröffentlichungstag der Anmeldung: 26.10.2016
(73) Patentinhaber: Fatzer AG Drahtseilfabrik, 8590 Romanshorn (CH)
(72) Erfinder: GRAF, Daniel, 9436 Balgach (CH)
(74) Vertreter: Luchs, Willi

(56) Entgegenhaltungen:
- EP-A1- 0 134 341
- EP-A2- 1 995 589
- WO-A1-95/30216
- WO-A1-2013/055196
- CN-U- 203 502 379

## Beschreibung

Die Erfindung betrifft ein Prüf- und Überwachungssystem mit einer Auswerteeinheit für eine Seilbahn nach dem Oberbegriff des Anspruchs 1 sowie ein Verfahren zum Betrieb derselben.

In der Druckschrift CN-U-203 502 379 ist ein Real-time Fehler-Detektions-System von Stahlseilen erläutert, bei dem Sicherheitszustände der Seile überwacht und in Echtzeit Seilbrüche verhindert und ihre Betriebszeit verlängert werden soll. Dieses Echtzeit Fehler-DetektionsSystem umfasst eine Collecting-Einheit, ein A/D-Modul, ein Prozessor, ein Feld-Alarm-Modul, ein kontaktloser Geschwindigkeits-Sensor, ein Kommunikationsmodul, ein Power-Supply-Modul, ein Master-Regelungs-Computer und ein Alarm-Modul. Diese Collecting-Einheit besteht aus einem magnetisch durchlässigen abgestimmten Sensor oder einem magnetischen Sensor.

Bei der Druckschrift DE-A-1 995 589 ist ein Fehlerdetektor von Drahtseilen offenbart, welcher Veränderungen des Magnetflusses des Seils feststellt und damit Schadensbereiche der Stahldrähte ermittelt werden können. Der Detektor besteht aus einem Magneterzeuger zum Magnetisieren des Drahtseils in seiner Längserstreckung. Eine Anzahl von magnetischen Detektoren ermöglicht die Feststellung von Störungen des Magnetflusses über den Umfang des Seils und ein Speichern der Tiefe der ermittelten Schadensbereiche, Stärke des Schadens sowie die Summe derselben aufgrund der mehreren Detektoren.

Diese Fehlerdetektoren dienen ausschliesslich nur zur Feststellung von Beschädigungen des Drahtseils. Insbesondere wenn aber das Drahtseil bei einer Seilbahn endlos geführt ist, können diese Defekte bei dem System nur lokalisiert werden, wenn das Drahtseil angehalten wird und sie sich damit nicht beim Betrieb der Seilbahn eignen.

In der Druckschrift WO-95/30216 ist ein Monitoring System offenbart, bei dem eine Fehlausrichtung eines an Kabelmasten hängenden Seils mittels eines Sensors und Vibrations-Sensoren bei den das Seil führenden Rollen zum Feststellen von Abweichungen der Vibrationen bei dem laufenden Seil vorgesehen sind. Die Signale der Sensoren werden durch Hochfrequenzübertragungen bei den Kabelmasten gesendet und durch Interface-Prozessoreinheiten zu einem Computer einer Basisstation weitergeleitet und von einem Operateur überwacht. Mit diesen Sensoren wird eine Überwachung des Seils durchgeführt, bei dem Abweichungen bzw. unsichere Veränderungen insbesondere die Position der Längsführung des Seils zwischen den Masten festgestellt werden sollen, aber nicht eine Überwachung zu der Lebensdauer der Seils.

Seilbahnen werden immer häufiger vor allem in Grossstädten als Ersatz für über- oder unterirdische Stadtbahnen eingesetzt. Sie haben den Vorteil, dass sie relativ unabhängig von Topographie und bestehender Bebauung und Infrastruktur in die Stadt integriert werden können und somit als unabhängiges Verkehrssystem Personen und Waren schnell transportieren können. Sie verbinden zwei oder mehrere Punkte auf der jeweils kürzest möglichen Strecke, der Luftlinie. Solche Seilbahnen werden normalerweise in die öffentlichen Verkehrsnetze eingebunden und sind pro Tag bis zu 20 Stunden ununterbrochen in Betrieb. Die dadurch entstehende hohe Beanspruchung auf das Seil und Komponenten der Seilbahnanlage auf Grund der hohen Anzahl von Seilumläufen bewirkt eine vergleichsweise beschleunigte Materialermüdung und erhöhten Verschleiss, so dass bei urbanen Anlagen, anders als beispielsweise bei Bergbahnen, die Seilablegekriterien deutlich früher, oft schon nach wenigen Betriebsjahren erreicht sind.

Betriebsausfälle sind aber sehr unerwünscht und nebstdem teuer, zumal sie auf urbanen Anlagen in der Regel eine Unterbrechung des öffentlichen Verkehrs zur Folge haben. Arbeiten am Seil, beispielsweise Seilkürzung, Spleiss-Sanierungen, Reparaturarbeiten oder auch das Auswechseln eines Seils sind zeitaufwendig und müssen daher rechtzeitig geplant werden, um die Störung des regulären Seilbahnbetriebs zu minimieren. Zudem besteht oft das Problem, dass beim Einbau eines neuen Seils zu wenig freie Fläche für das Zusammenfügen eines umlaufenden Seils durch Spleissen vorhanden ist, was in Städten sogar dazu führen kann, dass Strassen oder Plätze gesperrt werden müssen, um die Spleissarbeiten ausführen zu können.

Für die Erkennung der Ablegereife bzw. des Endes der Lebensdauer eines Seils werden genormte Ablegekriterien angewandt. Diese oft landesspezifischen Normen schreiben auch die Prüfintervalle vor, innerhalb derer das Seil von einer zugelassenen Prüfstelle z. B. mittels magnetischer Prüfmethoden geprüft werden muss. Je nach Zustand des Seils und der voraussichtlichen Anzahl von Biegewechseln innerhalb eines bestimmten Zeitraums wird das Prüfintervall durch den Sachverständigen verkürzt und dadurch sichergestellt, dass eine Folgeprüfung durchgeführt wird, bevor ein kritischer Zustand eintritt.

Für herkömmliche Bergbahnen mit verhältnismässig geringer täglicher Betriebsdauer und / oder saisonal begrenztem Betrieb und dadurch entsprechend geringer Zahl an Biegewechseln pro Jahr kann das Prüfintervall bei gutem Seilzustand maximal ausgedehnt werden. Laufende Seile (umlaufende Seile oder Seile im Reversierbetrieb) derartiger Anlagen können abhängig von den Betriebsbedingungen Lebensdauern in der Grössenordnung von über 20 Jahren erreichen.

Auf urbanen Seilbahnanlagen muss das Prüfintervall auf Grund der viel höheren täglichen Betriebsdauer und dem ganzjährigen Betrieb und der resultierenden hohen Anzahl an Biegewechseln deutlich verkürzt werden. Die Einsatzdauer eines laufenden Seils auf einer urbanen Anlage, also die Zeit bis zum Erreichen der Ablegereife, kann sogar kürzer sein als das maximale Prüfintervall. Die Prüfzyklen müssen abhängig vom Seilzustand auch kleiner ein Jahr gesetzt werden, um sicher zu stellen, dass die Ablegereife erkannt werden kann.

Zusätzlich zur Prüfung des Seils durch einen Sachverständigen sind visuelle Prüfungen vorgeschrieben, die der Betreiber selbst durchführen muss. Eine solche visuelle Kontrolle erfolgt mit dem menschlichen Auge oder kann von technischen Systemen unterstützt werden.

Der Erfindung liegt demgegenüber die Aufgabe zugrunde, ein Prüf- und Überwachungssystem für eine Seilbahn sowie ein Verfahren zu dessen Betrieb zu schaffen, mittels der bzw. dem eine optimale Auslegung dieser Seilbahn und im Speziellen auch des Seils, und ferner eine erhöhte Sicherheit der Anlage insgesamt erzielt wird. Dabei sollen Seilprüfungen an laufenden Seilen innerhalb kurzer Intervalle durchgeführt und dadurch eine schnelle Bewertung des aktuellen Zustands des Seils ermöglicht werden.

Diese Aufgabe ist erfindungsgemäss nach den Merkmalen des Anspruchs 1 bzw. den Verfahrensmerkmalen des Anspruchs 6 gelöst.

Insbesondere hochbeanspruchte Seilbahnlagen, wie urbane Anlagen und/oder Anlagen mit extrem hohen Biegewechselzahlen sollen durch regelmässige Prüfung in kurzen Intervallen einen Zugewinn an Sicherheit erfahren. Zudem erlaubt die annähernd permanente Überwachung und Erfassung des Seilzustands eine vorausschauende Planung der nötigen Arbeiten am Seil wodurch Betriebsunterbrechungen minimiert werden sollen und eine für den Betrieb optimale Terminplanung ermöglicht werden soll. Durch eine Lebensdauerprognose basierend auf einer Vielzahl von Messungen soll ein unerwarteter Ausfall eines Seils bestmöglich verhindert werden.

Auf diese Weise wird primär die Spleissstelle des Seils festgestellt, die bekanntlich strukturell heterogener und/oder stärker ist als der Seilstrang. Die Ortung der Spleissstelle ermöglicht die Auszählung der von der Seilbahn vollzogenen Umläufe und somit die Ermittlung des zurückgelegten Seilweges zwischen zwei aufeinanderfolgenden Messzyklen. Sie ermöglicht aber auch die genaue Lokalisierung etwaiger Schadstellen des Seils in Bezug auf die vorab geortete Speisstelle.

Für das Management des Seils im Hinblick auf eine optimale Lebensdauer des Seils sieht die Erfindung vor, dass die Auswertung der Prüfungsergebnisse unter Berücksichtigung bestimmter den Betriebszustand der Anlage beschreibender und beeinflussender Parameter, wie die Biegewechselanzahl und die Länge des zurückgelegten Seilwegs durchgeführt wird. Hinzu kommen gegebenenfalls die Schlaglänge des Seils und/oder die Veränderung der Position des das Seil nachspannenden Spannwagens, aber auch die Umgebungstemperatur, die Geräuschemission der Anlage z. B. durch zunehmende Vibration durch Verschleiss von Anlagenteilen und/oder die Lufteigenschaften in der Anlage.

Die Online-Prüfung des Seils ermöglicht die selbsttätige Durchführung der Prüfung und Auswertung gemäss einem vorab festgelegten Überwachungsprogramm, das die obengenannten Parameter sowie gegebenenfalls weitere Eingaben, wie die Anzahl Spleisse und/oder die gesamte Seillänge, berücksichtigt.

Da für das Management des Seils einer hochbeanspruchten Seilbahnanlage eine häufige Prüfung der Anlage erforderlich ist, ist vorgesehen, dass der Prüfungsvorgang selbsttätig durch das Überwachungsprogramm mit einer vorgegebenen kurzen Frequenz, etwa wöchentlich, und/oder zu einem vorgegebenen Termin ausgelöst wird.

Es ist erfindungsgemäss möglich, das Prüfgerät sowohl selbsttätig von der Fernüberwachungsstation aus als auch in situ mittels eines am Gerät angebrachten Betätigungsknopfes zu aktivieren.

Das in der Regel unabhängig vom Seilbahnbetrieb funktionierende Prüfungs- und Überwachungssystem besteht aus einer in der Seilbahn installierten Messeinheit, einer ihr dort benachbarten Speicher- und Übertragungseinheit sowie einer in der Fernüberwachungsstation installierten Auswertungseinheit mit einer Auswerte- und Analysesoftware zur Auswertung und Visualisierung der von der Speicher- und Übertragungseinheit via Ethernet oder sonstigen Netzwerken übermittelten Messdaten. Dieses Prüfungs- & Überwachungssystem kann auch auf bestehenden Anlagen nachgerüstet werden.

Das Prüfsystem kann auch mit anderen Prüfverfahren kombiniert eingesetzt werden. Es ist also möglich, z.B. eine visuelle Kontrolle mit Hilfe eines Visuellen Prüfgeräts gleichzeitig mit der magnetischen Prüfung durch das fest installierte Prüfsystem durchzuführen. Der Zeitaufwand zur Durchführung dieser Prüfungen wird minimiert, da beide Prüfungen im selben Umlauf erfolgen können

Die Messeinheit besteht aus einer Magnetisierungseinheit und einem seilumfassenden Sensorsystem.

Die Magnetisierungseinheit magnetisiert das Seil mit Hilfe von Permanentmagneten oder Elektromagneten. Das von der Magnetisierungseinheit magnetisierte Seil gibt ein magnetisches Streufeld ab, das vom Sensorsystem erfasst wird.

Das Sensorsystem besteht aus einer oder mehreren Spulen oder Hall-Sensoren, die um das Seil herum angeordnet sind. Es ergeben sich somit mindestens 2 Messprinzipen, die auch kombiniert einsetzbar sind. Die Messung mit Spulen basiert auf der magnetischen Spannungsinduktion durch Relativbewegung zwischen Spule und magnetisiertem Seil. Durch das magnetische Streufeld des magnetisierten Seils wird eine Spannung in die Spule(n) induziert. Die Messung mit Hall-Sensoren basiert auf dem sogenannten Halleffekt. Abhängig von der magnetischen Feldstärke des magnetisierten Seils ändert sich die Spannung am Hallsensor.

Das magnetische Streufeld des Seils kann somit vom Sensorsystem detektiert werden. Störstellen im Seil wie z. B. Drahtbrüche verursachen ebenfalls ein magnetisches Streufeld welches das magnetische Streufeld des Seils überlagert und vom Sensorsystem erfasst wird. Abhängig von Seil und Beschaffenheit der Störstelle wird ein typisches Messsignal generiert. Das Messsignal wird schliesslich für die Auswertung zur Verfügung gestellt.

Das Messsystem kann die gefahrenen Seilmeter erfassen und stellt diese für die Auswertung zur Verfügung. Es kann eine automatisierte Berechnung der Biegewechselzahl erfolgen. Die gefahrenen Seilmeter können mit dem Sensorsystem oder mit zusätzlichen externen Sensoren detektiert werden.

Es ist auch möglich, die in der Seilbahn installierten Komponenten des Systems, nämlich die Messeinheit und die Speicher- und Übertragungseinheit in einem Gerät zu integrieren.

Die Erfindung wird nachfolgend anhand eines Ausführungsbeispiels unter Bezugnahme auf die Zeichnung näher erläutert. Es zeigen:
- Fig. 1: eine schematische Ansicht eines Seilbahnendes mit den Komponenten eines erfindungsgemässen Prüfungs- und Überwachungssystems; und
- Fig. 2: ein Blockdiagramm des Prüfungs- und Überwachungssystem der Seilbahn nach Fig. 1.

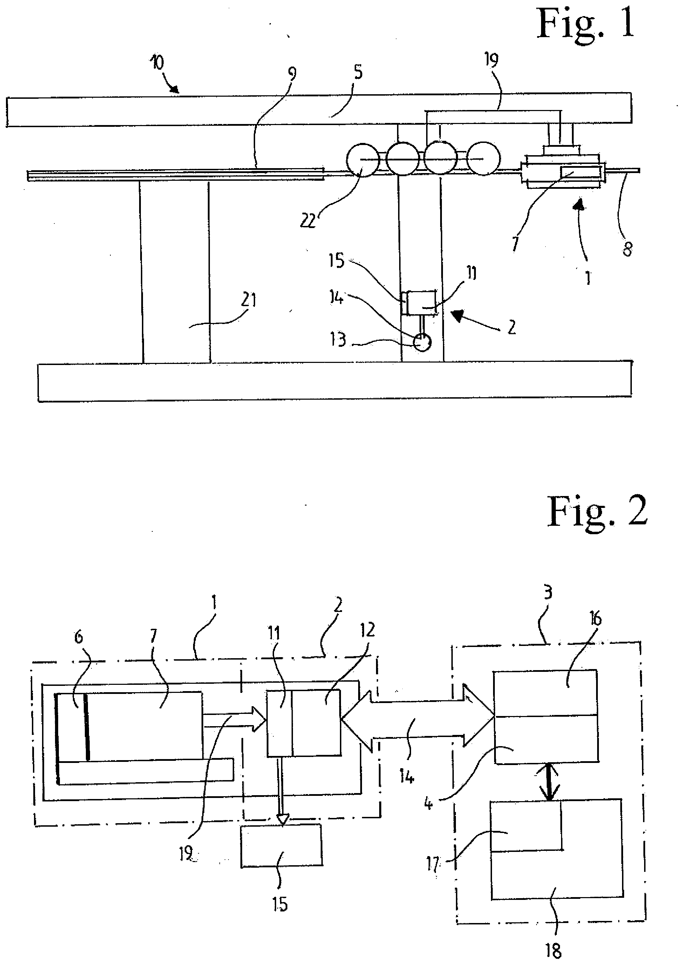

Fig. 1 zeigt schematisch das Ende einer urbanen Seilbahn 10, welche im vorliegenden Ausführungsbeispiel als Luftseilbahn vorgesehen ist. Eine solche Luftseilbahn ist insbesondere in einem Stadtgebiet installiert. Sie ermöglicht damit einen schnellen und strassenunabhängigen Transport von Personen und Gütern und verursacht dabei auch einen geringen Lärm. Es kann aber auch eine Seilbahn auf Schienen vorgesehen sein, welche ebenfalls primär in Städten gebaut wird.

Von dieser Seilbahn 10 sind die auf einem Ständer 21 drehbar gelagerte endseitige Umlaufrolle 9 sowie Führungsrollen 22 für das Seil 8 veranschaulicht. Diese Umlaufrolle 9 kann auch als Antriebsrad ausgestaltet sein. Das Seil 8 ist dabei vom einen zum andern Ende der Seilbahn 10 geführt und befördert dabei die Kabinen, welche bei den Stationen vom Seil 8 gelöst werden und folglich nicht dargestellt sind.

Erfindungsgemäss ist ein Prüfungs- und Überwachungssystem 1, 2 vorzugsweise bei dem Seilbahnende 10 integriert, welches mit einer Auswerteeinheit 3 verbunden ist und eine Überwachung bzw. Prüfung zumindest des Seils 8 ermöglicht.

Zweckmässigerweise ist eine Messeinheit 1 des Prüfungs- und Überwachungssystems beim Ende der Seilführung am Stationsträger 5 befestigt und ihr Prüfgerät 7 umfasst das Seil bzw. ist unmittelbar neben dem Seil angeordnet. Eine mit dieser Messeinheit 1 vorteilhaft über eine Datenleitung 19 verbundene Speicher- und Übertragungseinheit 2 ist via Ethernet oder einem ähnlichen Datennetz und über ein Netzwerk mit der Auswerteeinheit 3 verbunden. Die freie Seilstrecke, bei der das Prüfgerät 7 montiert ist, befindet sich vorteilhafterweise in der Nähe der Umlaufrolle 9 und, um Messfälschungen zu vermeiden, am besten dort, wo keine Kabine aufgehängt ist.

Mit dieser erfindungsgemässen Seilbahn können Verbesserungen sowohl hinsichtlich der Betriebssicherheit der Anlage als auch der Wirtschaftlichkeit des Anlagebetriebs über eine möglichst lange Betriebszeit erzielt werden.

Die Messeinheit 1 ist mit einem ortsfest installierten Prüfgerät 7 versehen, dessen Magnetfeld auf das Seil 8 derart einwirkt, dass durch eine um das Seil berührungslos gelegte Spule ein Strom geleitet wird, dessen Spannung nach dem sogenannten Hall-Effekt von der Magnetfeldstärke abhängig ist und dadurch von Abweichungen der Stärke und/oder Beschaffenheit des Seils anhängige Signale generiert.

Die Messeinheit 1 beinhaltet eine Magnetisierungseinheit, die eine Magnetisierung des Seils 8 bewirkt. Das magnetische Streufeld des Seils wird vom Sensorsystem der Messeinheit detektiert, das ebenfalls in der Messeinheit integriert ist. Das Sensorsystem besteht aus einer oder mehreren Spulen oder mehreren Hallsensoren oder einer Kombination aus Spule(n) und Hallsensoren, die das Seil berührungslos umfassen. Das magnetische Streufeld des Seils wird vom Sensorsystem detektiert. Abhängig von Seil und Beschaffenheit einer Störstelle wird ein typisches Messsignal generiert und für die Auswertung zur Verfügung gestellt.

Die Speicher- und Übertragungseinheit 2 ist nahe der Messeinheit 1 installiert und steht mit ihr über dieser Datenleitung 19 in Wirkverbindung. Sie enthält einen Speicherteil 11 und einen Datenübertragungsteil 12, einen Netzanschluss 13 sowie einen Ethernetanschluss 14, über den die Verbindung mit der Überwachungsstation 3 hergestellt wird. Der Speicherteil 11 kann auch mit einem Anschluss 15 für einen USB-Stick versehen sein. Er muss mehrere komplette Messungen eines Seils speichern können, und die gespeicherten Daten müssen auch bei Stromausfall erhalten bleiben.

Anstelle einer kabelgebundenen Netzwerkverbindung kann in die Speicher- und Übertragungseinheit 2 auch eine kabellose Verbindung zu einem Netzwerk integriert sein, die eine Funkverbindung bzw. Mobilfunkverbindung zu einem Netzwerk und damit den Kontakt zur Auswerteeinheit 3 ermöglicht.

Die Messeinheit 1 ist in einem Träger 5 der Seilbahn fest installiert und enthält ein Biegewechselzählwerk 6 sowie das Prüfgerät 7 mit der dazugehörigen Hardware, dessen Magnetfeld auf das Seil so einwirkt, dass in einer um das Seil berührungslos gelegte Spule ein Strom geleitet wird, dessen Spannung von der aus Querschnitt und Beschaffenheit des Seils resultierende Magnetfeldstärke abhängig ist. Die dadurch entstehenden elektromagnetischen Signale werden in der Speicher- und Übertragungseinheit 2 gespeichert und dort an die Auswerteeinheit 3 übertragen.

Gemäss Fig. 2 umfasst dieses Prüfungs- und Überwachungssystem diese Messeinheit 1, die Speicher- und Übertragungseinheit 2 zur Speicherung und Übermittlung der Messdaten sowie diese Auswerteeinheit 3 zur Auswertung und Visualisierung der Messdaten. Die Auswerteeinheit 3 ist ihrerseits fernab der Seilbahn in einer Überwachungszentrale 4 untergebracht. Dort kann permanent oder in gewissen Zeitabständen die Verarbeitung und Auswertung der via das Netzwerk übermittelten Messdaten ausgeführt werden.

Der Startpunkt der Messung erfolgt dabei immer am selben Ort des Seils, wobei dieser selbsttätig vom Prüfungsgerät 7 erkannt wird. Als Startpunkt dient vorzugsweise die Spleissstelle des Seils, die gleichzeitig als Bezugspunkt zur Positionierung der weiteren Prüfstellen benutzt wird.

Zur Ermittlung der Biegewechselanzahl wird der Weg der Seilbewegung entlang seiner Achse gemessen, den die Seilbahn während des Betriebes zurücklegt. Dieser Seilweg wird zum Beispiel im Tagesrythmus gespeichert und soll vorteilhaft innerhalb der Sollvorgaben für eine optimale Lebensdauer des Seils liegen.

Beim beschriebenen Ausführungsbeispiel sind die Einheiten 1 und 2 zwei apparativ voneinander getrennte Komponenten des Systems. Sie können aber ohne weiteres in einem Einzelgerät gepackt werden.

Die Auswertungseinheit 3 befindet sich fern ab der Seilbahn in der Fernüberwachungsstation 4, die auch eine Einrichtung 16 zur Standardeinstellungen mitenthält und mit einem Softwareprogramm 17 für das Auswerten, Analysieren und Visualisieren mittels eines PC-Systems 18 versehen ist. Zu den einzugebenden Grundeinstellungen zählen die Anzahl Spleisse sowie die jeweiligen Seillänge. Diese Grundeinstellungen können per Fernzugriff via Ethernet geändert werden. Die Auswertungseinheit 3 stellt auch Prognosen auf hinsichtlich der Seillebedauer für die freie Seillänge oder für die Spleisslebedauer über die gezählten Biegewechsel.

Die Auswertungseinheit 3 besitzt auch eine Visualisierungs-Software zur optischen Darstellung der Messdaten einschliesslich der graphischen Aufbereitung der Ergebnisse und insbesondere der gegebenenfalls auftretenden Drahtbrüche.

In der Regel wird die Prüfung in der Überwachungsstation 4 per Fernzugriff nach einem festgelegten Programm selbstauslösend ausgelöst, nach dem die Frequenz, der Wochentag und die Uhrzeit der Messung festgelegt sind. Die Prüfung kann aber in Sonderfällen auch in situ durch Betätigen eines Prüfgerät 8 angeordneten Betätigungsknopfs ausgelöst werden. Ein weiterer Fernzugriff auf das Prüfgerät 8 ermöglicht die Auslesung des Speichers.

Die anschliessende Auswertung der Messdaten erfolgt in der Einheit 17, 18 der Überwachungsstation 4 ebenfalls selbsttätig anhand eines Programms, das zur Steigerung der Aussagekraft der Prüfungsergebnisse eine Reihe Parameter wie die Biegewechselanzahl, die Anzahl Spleisse und die gesamte Seillänge sowie auch die Raumtemperatur in der Anlage, die Schlaglänge des Seils und die Position des das Seil nachspannenden Spannwagens berücksichtigt. Vorteilhaft ist ein solcher Spannwagen in dem Ständer 21 integriert, was nicht näher gezeigt ist. Dieser Spannwagen bewirkt, dass das um die Rolle 9 geführte Seil 8 gegen seine Längserstreckung mit einer vorgegebenen Kraft gespannt wird.

Hinzu kommt gegebenenfalls die Einbeziehung von Messergebnissen aus anderen vergleichbaren Seilbahnen, die auch von der Überwachungsstation 4 aus überwacht werden. Die Steuerprogramme können von Fall zu Fall individuell eingestellt werden.

Das erfindungsgemässe Prüfungs- und Überwachungssystem ermöglicht die regelmässige Prüfung der Seilbahnen mit einer apparativ qualifizierten Einrichtung, die ohne Interaktion von Personal verzögerungsfrei und zuverlässig funktioniert. Es ermöglicht auch die zentrale Fernüberwachung mehrerer Seilbahnen, deren Standorte weit voneinander entfernt sind.

Das System bietet apparativ und personaltechnisch sowie hinsichtlich seiner Wirtschaftlichkeit wesentliche Vorteile und ermöglicht zudem das genaue Management des Seils im Hinblick auf eine optimale Lebensdauer. Es können Verbesserungen auch hinsichtlich der Betriebssicherheit der Anlage und der Wirtschaftlichkeit des Anlagebetriebs über eine möglichst lange Betriebszeit erzielt werden.

Ein sehr zuverlässiges Orten bzw. Erkennen der Spleissstelle kann ferner auch durch Messen von akustischen Werten und/oder Vibrationen des laufenden Drahtseils erfolgen. Mittels einer nicht näher gezeigten Messeinrichtung können diese akustischen Werte durch ein Mikrophon bzw. durch einen Vibrationssensor, welcher irgendwo auf der Anlage montiert werden kann, festgestellt und entsprechend ausgewertet werden.

Das Prüfsystem und das beschriebene Verfahren sind universell für laufende Seile einsetzbar und können daher auch auf bestehenden Anlagen nachgerüstet werden.

Ferner ist das Prüfverfahren mit anderen Seilprüfverfahren wie z. B. elektronisch unterstützter visueller Seilprüfung kombiniert einsetzbar.

## Patentansprüche

1. Prüfungs- und Überwachungssystem mit einer Auswerteeinheit für eine Seilbahn, mit einem vom einen zum andern Ende der Seilbahn (10) geführten Seil (8), welches die eine oder mehreren Kabinen bzw. Bahnen befördert, wobei das mit der Auswerteeinheit (3) verbundene Prüfungs- und Überwachungssystem (1, 2) eine Überwachung bzw. Prüfung zumindest des Seils (8) ermöglicht, wobei die Seilbahn (10) insbesondere für einen urbanen Transport von Personen und Gütern vorgesehen ist, **dadurch gekennzeichnet dass** die Auswertung der Prüfungsergebnisse unter Berücksichtigung bestimmter den Betriebszustand der Anlage beschreibender und beeinflussender Parameter durchgeführt wird, wie die Biegewechselanzahl und die Länge des zurückgelegten Seilwegs.

2. Prüfungs- und Überwachungssystem nach Anspruch 1, **dadurch gekennzeichnet dass**
die Auswerteeinheit (3) für die Auswertung der gelieferten Messdaten des Prüfungs- und Überwachungssystems (1, 2) in einer fernab der Seilbahn (10) stationierten Überwachungszentrale (4) angeordnet ist, die über ein Datennetz, wie Ethernet, und/oder ein zusätzliches Netzwerk mit dem Prüfungs- und Überwachungssystem verbunden ist, wobei diese Auswerteeinheit (3) über ein Softwareprogramm für das Auswerten, Analysieren und Visualisieren verfügt.

3. Prüfungs- und Überwachungssystem nach Anspruch 1 oder 2, **dadurch gekennzeichnet, dass**
das Prüfungs- und Überwachungssystem eine in der Seilbahn (10) installierte Messeinheit (1) mit der dazugehörigen Hardware, eine mit dieser verbundenen Speicher- und Übertragungseinheit (2) zur Speicherung und Übermittlung der Messdaten sowie eine in der Überwachungszentrale (4) installierte Auswertungs- und Visualisierungseinheit (3) mit der dazugehörigen Software zur manuellen und/oder automatisierten Auswertung und Visualisierung der Messdaten aufweist.

4. Prüfungs- und Überwachungssystem nach Anspruch 3, **dadurch gekennzeichnet dass**
die Messeinheit (1) eine Magnetisierungseinheit beinhaltet, die eine Magnetisierung des Seils (8) bewirkt.

5. Prüfungs- und Überwachungssystem nach Anspruch 1, **dadurch gekennzeichnet, dass**
ein Orten bzw. Erkennen der Spleissstelle des Seils (8) durch Messen von akustischen Werten und/oder Vibrationen des laufenden Drahtseils erfolgt.

6. Verfahren zum Betrieb einer Seilbahn mit einem Prüfungs- und Überwachungssystem nach einem der vorhergehenden Ansprüche 1 bis 5, **dadurch gekennzeichnet, dass**
der Betriebszustand des Seils (8) durch eine Online-Prüfung des Seils mit vorzugsweise elektromagnetischen Signalen ermittelt wird.

7. Verfahren nach Anspruch 6, **dadurch gekennzeichnet, dass** die Auswertung der Prüfungsergebnisse zusätzlich Umgebungsbedingungen, wie die Raumtemperatur in der Anlage, die Schlaglänge des Seils, die Geräuschemission der Anlage und/oder die Veränderung der Position des das Seil nachspannenden Spannwagens berücksichtigt.

8. Verfahren nach Anspruch 6 oder 7, **dadurch gekennzeichnet, dass**
der Prüfungs- und Auswertungsvorgang selbsttätig gemäss einem vorab festgelegten Überwachungsprogramm durchgeführt wird.

9. Verfahren nach Anspruch 8, **dadurch gekennzeichnet, dass** der Prüfungsvorgang selbsttätig durch das Überwachungsprogramm mit einer vorgegebenen Frequenz und/oder zu einem vorgegebenen Termin ausgelöst wird.

10. Verfahren nach einem der vorhergehenden Ansprüche 6 bis 9, **dadurch gekennzeichnet, dass**
ein Nothalt der Seilbahn ermöglicht wird, wenn das Prüfgerät das Seil berührt oder das Prüfgerät beschädigt wird.

11. Verfahren nach einem der vorhergehenden Ansprüche 6 bis 10, **dadurch gekennzeichnet, dass**
die Messung manuell am Prüfgerät ausgelöst werden kann oder manuell über die Auswerteeinheit per Fernzugriff via Datenverbindung / Netzwerkverbindung.

12. Verfahren nach einem der vorhergehenden Ansprüche 6 bis 11, **dadurch gekennzeichnet, dass**
die Auswertungseinheit eine automatische oder halbautomatische Auswertung des Seilzustands ermöglicht und daraus eine Lebensdauerprognose generiert wird.

13. Verfahren nach einem der vorhergehenden Ansprüche 6 bis 12, **dadurch gekennzeichnet, dass**
mit Hilfe der Auswerteeinheit (3) ein Fernzugriff auf das Prüfsystem erfolgen kann und dieses dadurch konfiguriert und aktualisiert werden kann.

14. Verfahren nach einem der vorhergehenden Ansprüche 6 bis 13, **dadurch gekennzeichnet, dass**
das Prüfverfahren auch die Seilschlaglänge des Seils (8) erfassen kann.

## Claims

1. An inspection and monitoring system with an assessment unit for a cable railway, comprising a cable (8) guided from one end to the other of the cable railway (10) and which advances the one or more cabins or trains, whereby the inspection and monitoring system (1, 2) connected to the assessment unit (3) enables the monitoring or inspection of at least the cable (8), whereby the cable railway (10) is provided in particular for an urban transportation of people and goods, **characterised in that**
that the assessment of the inspection results is being proceeded taking into account certain parameters that describe and influence the operating state of the system, such as the number of bending cycles and the length of the cable path covered.

2. The inspection and monitoring system according to Claim 1, **characterised in that**
the assessment unit (3) for the assessment of the measurement data supplied by the inspection and monitoring system (1, 2) are disposed in a monitoring centre (4) positioned away from the cable railway (10), and which is connected to the inspection and monitoring system by a data network, such as Ethernet, and/or an additional network, whereby this assessment unit (3) having a software programme for assessment, analysis and visualisation.

3. The inspection and monitoring system according to Claim 1 or 2, **characterised in that**
the inspection and monitoring system has a measuring unit (1) installed in the cable railway (10) with the corresponding hardware, a storage and transmission unit (2) connected to the latter for the storage and communication of the measurement data and an assessment and visualisation unit (3) installed in the monitoring centre (4) with the corresponding software for the manual and/or automated assessment and visualisation of the measurement data.

4. The inspection and monitoring system according to Claim 3, **characterised in that**
the measuring unit (1) includes a magnetisation unit that brings about magnetisation of the cable (8).

5. The inspection and monitoring system according to Claim 1, **characterised in that**
the splicing point of the cable (8) is located or detected by measuring acoustic values and/or vibrations of the running wire cable.

6. A method of operating a cable railway comprising an inspection and monitoring system according to any of the preceding Claims 1 to 5, **characterised in that**
the operating state of the cable (8) is determined by an online inspection of the cable with preferably electromagnetic signals.

7. The method according to Claim 6, **characterised in that** the assessment of the inspection results additionally takes into account environmental conditions, such as the ambient temperature in the system, the lay length of the cable, the noise emission of the system and/or the change in position of the tensioning carriage re-tensioning the cable.

8. The method according to Claim 6 or 7, **characterised in that** the inspection and assessment process is carried out automatically according to a previously determined monitoring programme.

9. The method according to Claim 8, **characterised in that** the inspection process is initiated automatically by the monitoring programme with a pre-specified frequency and/or at a pre-specified date.

10. The method according to any of the preceding Claims 6 to 9, **characterised in that**
emergency stoppage of the cable railway is made possible, if the inspection apparatus touches the cable or the inspection apparatus is damaged.

11. The method according to any of the preceding Claims 6 to 10, **characterised in that**
the measurement can be initiated manually on the inspection apparatus or manually by means of the assessment unit there is remote access via a data connection/network connection.

12. The method according to any of the preceding Claims 6 to 11, **characterised in that**
the assessment unit enables automatic or semi-automatic assessment of the state of the cable and a life span forecast is generated from the latter.

13. The method according to any of the preceding Claims 6 to 12, **characterised in that**
remote access to the inspection system can be achieved with the aid of the assessment unit (3) and said inspection system can be configured and updated in this way.

14. The method according to any of the preceding Claims 6 to 13, **characterised in that**
the inspection method can also detect the lay length of the cable (8).

## Revendications

1. Système de contrôle et de surveillance ayant une unité d'exploitation pour un transporteur aérien, comprenant un câble (8) qui est guidé d'une extrémité à l'autre du transporteur (10) aérien et qui transporte une ou plusieurs cabines ou transporteurs dans lequel le système (1, 2) de contrôle et de surveillance relié à l'unité (3) d'exploitation permet une surveillance ou un contrôle au moins du câble (8), le transporteur (10) aérien étant prévu notamment pour un transport urbain de personnes et de marchandises, **caractérisé en ce que**
l'exploitation des résultats du contrôle s'effectue en tenant compte de paramètres déterminés décrivant et influençant l'état de fonctionnement de l'installation comme le nombre d'alternances de flexions et la longueur du trajet parcouru par le câble.

2. Système de contrôle et de surveillance suivant la revendication 1, **caractérisé en ce que**
l'unité (3) d'exploitation est disposée pour l'exploitation des données de mesures fournies du système (1, 2) de contrôle et de surveillance dans une centrale (4) de surveillance stationnée à distance du transporteur (10) aérien qui est relié par un réseau de données, comme l'Ethernet et/ou par un réseau supplémentaire au système de contrôle et de surveillance, cette unité (3) d'exploitation disposant d'un programme logiciel pour l'exploitation, l'analyse et la visualisation.

3. Système de contrôle et de surveillance suivant la revendication 1 ou 2, **caractérisé en ce que**
ce système de contrôle et de surveillance a une unité (1) de mesure embarquée dans le transmetteur (10) aérien et ayant un matériel associé, une unité (2) de mise en mémoire et de transmission reliée à celui-ci pour la mise en mémoire et la transmission des données de mesure, ainsi qu'une unité (3) d'exploitation et de visualisation installée dans la centrale (4) de surveillance et ayant le logiciel associé pour l'exploitation et la visualisation manuelle et/ou automatisée des données de mesures.

4. Système de contrôle et de surveillance suivant la revendication 3, **caractérisé en ce que**
l'unité (1) de mesure comporte une unité d'aimantation qui provoque une aimantation du câble (3).

5. Système de contrôle et de surveillance suivant la revendication 1, **caractérisé en ce que**
une localisation ou une détection du point d'épissure du câble (8) s'effectue par mesure de valeurs acoustiques et/ou de vibrations du câble métallique en fonctionnement.

6. Procédé pour faire fonctionner un transporteur aérien ayant un système de contrôle et de surveillance suivant l'une des revendications 1 à 5 précédentes, **caractérisé en ce que** on détermine l'état de fonctionnement du câble (8) par un contrôle en ligne du câble par des signaux de préférence électromagnétiques.

7. Procédé suivant la revendication 6, **caractérisé en ce que** l'exploitation des résultats du contrôle prend compte en outre des conditions ambiantes, comme la température ambiante dans l'installation, le pas de câblage du câble, l'émission de bruit de l'installation et/ou la variation de la position du chariot tendeur tendant le câble.

8. Procédé suivant la revendication 6 ou 7, **caractérisé en ce que** on effectue l'opération de contrôle et de surveillance automatiquement, suivant un programme de surveillance fixé à l'avance.

9. Procédé suivant la revendication 8, **caractérisé en ce qu'** on déclenche l'opération de contrôle automatiquement par le programme de surveillance à une fréquence donnée à l'avance et/ou à un délai donné à l'avance.

10. Procédé suivant l'une des revendications 6 à 9 précédentes, **caractérisé en ce que**
un arrêt d'urgence du transporteur aérien est possible si l'appareil de contrôle touche le câble ou si l'appareil de contrôle est endommagé.

11. Procédé suivant l'une des revendications 6 à 10 précédentes, **caractérisé en ce que**
l'on peut déclencher la mesure manuellement sur l'appareil de contrôle ou manuellement par l'intermédiaire de l'unité d'exploitation, par télé-accès, par l'intermédiaire d'une liaison de données/ liaison de réseau.

12. Procédé suivant l'une des revendications 6 à 11 précédentes, **caractérisé en ce que**
l'unité d'exploitation rend possible une exploitation automatique ou semi-automatique de l'état du câble et on en produit un pronostic de durée de vie.

13. Procédé suivant l'une des revendications 6 à 12 précédentes, **caractérisé en ce que**
à l'aide de l'unité (3) d'exploitation, on peut effectuer un télé-accès au système de contrôle et celui-ci peut ainsi être configuré et mis à jour.

14. Procédé suivant l'une des revendications 6 à 13 précédentes, **caractérisé en ce que**
le procédé de contrôle peut détecter aussi le pas de câblage du câble (8).
